Europäisches Patentamt

(19) European Patent Office

Office européen des brevets

(11) Numéro de publication: **0 196 971**
**B1**

(12)

# FASCICULE DE BREVET EUROPÉEN

(45) Date de publication du fascicule du brevet:
17.01.90

(51) Int. Cl. ⁴: **B 23 K   9/00**

(21) Numéro de dépôt: **86400648.1**

(22) Date de dépôt: **26.03.86**

(54) **Procédé de réparation par chemisage d'un tube de générateur de vapeur.**

(30) Priorité: **29.03.85 FR 8504835**

(43) Date de publication de la demande:
**08.10.86 Bulletin 86/41**

(45) Mention de la délivrance du brevet:
**17.01.90 Bulletin 90/03**

(84) Etats contractants désignés:
**BE CH DE IT LI SE**

(56) Documents cité:
**EP-A-0 121 137**
**WO-A-84/01119**

(73) Titulaire: **FRAMATOME**
**Tour Fiat 1, Place de la Coupole**
**F-92400 Courbevoie (FR)**

(72) Inventeur: **Gaudin, Jean-Paul**
**3 rue Jacques Brel**
**F-69680 Chassieu (FR)**

(74) Mandataire: **Bressand, Georges**
**c/o CABINET LAVOIX 2 Place d'Estienne d'Orves**
**F-75441 Paris Cédex 09 (FR)**

LIBERGRAF, STOCKHOLM 1990

EP 0 196 971 B1

## Description

L'invention concerne un procédé de réparation par chemisage d'un tube d'un générateur de vapeur, voir EP-A-0 121 137.

Les générateurs de vapeur des réacteurs nucléaires à eau sous pression comportent un faisceau de tubes dont les extrémités sont dudgeonnées dans une plaque tubulaire de forte épaisseur. L'eau primaire du réacteur à forte pression et à haute température qui vient en contact avec les assemblages combustibles du coeur circule à l'intérieur des tubes du faisceau pour échauffer et vaporiser de l'eau d'alimentation mise en contact avec la paroi externe des tubes, à l'intérieur de l'enveloppe du générateur de vapeur.

Les tubes du faisceau affleurent sur l'une des faces de la plaque appelée face d'entrée, par où l'eau primaire entre et ressort du faisceau dans deux zones distinctes, et débouchent de cette plaque tubulaire pour pénétrer dans l'enveloppe du faisceau par son autre face ou face de sortie.

La paroi des tubes du faisceau constitue donc une barrière entre le fluide primaire contenant des particules activées et l'eau d'alimentation à vaporiser dont la vapeur est envoyée à la turbine associée au réacteur nucléaire. Il est donc nécessaire d'éviter au maximum l'apparition de fuites dans les tubes du faisceau du générateur de vapeur et de réparer les tubes le plus vite possible et de façon efficace, lorsque leur paroi est percée.

Du fait des gradients de température, des contraintes mécaniques dues aux différences de pression et aux différentes formes de corrosion pouvant apparaître dans le générateur de vapeur, tant du côté primaire que du côté secondaire, au cours de l'utilisation du générateur de vapeur dont la durée de vie doit être égale à celle des autres parties du réacteur, des perçages des tubes générateurs de fuites peuvent apparaître et nécessiter des réparations lors des phases d'entretien du réacteur.

Jusqu'ici une des techniques les plus utilisées consistait à placer le tube défectueux hors service par l'intermédiaire d'un bouchon fixé à l'extrémité du tube voisine de la face d'entrée de la plaque tubulaire, dans sa partie recevant l'eau primaire venant du coeur du réacteur. Cette technique connue est d'une assez grande fiabilité mais a pour inconvénient de diminuer la surface d'échange du générateur de vapeur et ce, d'autant plus, qu'un plus grand nombre de tubes du faisceau aura dû être mis hors service.

On a donc imaginé des procédés de réparation des tubes du faisceau d'un générateur de vapeur par chemisage de ces tubes au niveau du défaut entraînant une perte d'étanchéité. Une chemise tubulaire d'un diamètre extérieur un peu inférieur au diamètre intérieur du tube à réparer et d'une longueur suffisante pour recouvrir le défaut est introduite dans le tube par la face d'entrée de la plaque tubulaire et placée dans cette plaque tubulaire et dans le tube de façon à affleurer la face d'entrée. On fixe ensuite cette chemise par expansion diamétrale à l'intérieur du tube.

On a par exemple proposé de réaliser cette expansion par un mandrin hydraulique mais la tenue mécanique et l'étanchéité du tube réparé se sont avérées insuffisantes.

On a proposé également d'améliorer la fixation de la chemise en la dudgeonnant à l'intérieur du tube.

Le dudgeonnage se traduit par un laminage de la chemise à l'intérieur du tube et donc par une diminution de son épaisseur.

On a donc proposé de braser la chemise à l'intérieur du tube après expansion hydraulique ou mécanique haute et basse de celle-ci. On réalise une expansion diamétrale de la chemise à l'intérieur du tube par voie hydraulique ou mécanique dans une zone de cette chemise située au-dessus de la plaque tubulaire, côté secondaire. On complète la fixation par fusion d'un matériau de brasage préalablement introduit entre la surface extérieure de la chemise et la surface intérieure du tube dans la zone subissant l'expansion.

Mais la brasure pose certain problème notamment de répartition et d'homogénéité, la fiabilité reste limitée quant à l'étanchéité, l'opération est compliquée et rendue plus honéreuse par la nécessité de prévoir une brasue intégrée, associée à un flux de brasage. C'est pourquoi, on préfère généralement fixer la chemise après déformation de celle-ci par soudage dans le tube.

Tout d'abord, on fixe donc l'extrémité basse de la chemise affleurant la face d'entrée de la plaque tubulaire à l'intérieur du tube, par dudgeonnage, afin de créer une liaison métallurgique, renforcée par un cordon de soudure périphérique.

Ensuite, on réalise une expansion diamétrale par dudgeonnage haut de la chemise à l'intérieur du tube, dans une seconde zone de cette chemise au-dessus de la plaque tubulaire. On complète la fixation mécanique par un soudage, au niveau de la zone déformée, de la chemise à l'intérieur du tube, en obtenant simultanément l'étanchéité.

Un tel procédé permet d'assurer une fixation mécanique et une étanchéité satisfaisantes de la chemise à l'intérieur du tube, mais la déformation est généralement réalisée sur une zone importante de la chemise, entraînant de fortes contraintes internes, notamment dans les zones singulières c'est-à-dire dans les zones situées de part et d'autre de la déformation, pouvant favoriser ultérieurement la corrosion, notamment la corrosion sous contrainte ou sous tension.

Le but de l'invention est donc de proposer un procédé de réparation par chemisage d'un tube d'un générateur de vapeur comportant un faisceau de tubes et une plaque tubulaire dans laquelle les tubes du faisceau sont dudgeonnés depuis la face d'entrée de la plaque tubulaire sur laquelle affleurent les extrémités des tubes jusqu'à la face de sortie par laquelle les tubes pénètrent dans le corps du générateur de vapeur, consistant à introduire dans le tube à réparer, depuis la face d'entrée de la plaque tubulaire, une chemise tubulaire d'un diamètre extérieur un peu inférieur au diamètre intérieur du tube et d'une longueur adaptée à la réparation à effectuer, à fixer la chemise par dudgeonnage dans le tube, dans une première zone proche de son extrémité, au voisinage de la face d'entrée de la plaque tubulaire et à fixer la chemise dans le tube, dans une seconde zone en dehors de la plaque tubulaire, en réalisant par dudgeonnage une déformation mécanique suivie d'un soudage entre la chemise et le tube.

Suivant l'invention les paramètres de la déformation mécanique de la chemise, réalisée par dudgeonnage dans sa partie extrême opposée à l'extrémité dudgeonnée dans la plaque tubulaire, sont calculés en fonction des paramètres de soudage appliqués consécutivement et déterminés de telle façon que la température atteinte dans les zones singulières de la déformation mécanique, par conduction à partir de la zone de fusion, dépasse la température de détensionnement du matériau considéré dans lesdites zones singulières provoquant ainsi une libération des contraintes dans les zones déformées.

Afin de bien faire comprendre l'invention, on va maintenant décrire, à titre d'exemple non limitatif, en se référant aux figures jointes en annexe, une opération de réparation d'un tube d'un générateur de vapeur d'un réacteur nucléaire à eau sous pression par chemisage, dans le cas d'un procédé suivant l'art antérieur et dans le cas du procédé suivant l'invention, ainsi que les moyens utilisés au cours de l'opération réalisée par le procédé suivant l'invention.

- La Fig. 1 est une vue en coupe par un plan de symétrie d'une partie de la plaque tubulaire et d'un tube à l'intérieur duquel on a réalisé une réparation par chemisage par un procédé suivant l'art antérieur;
- La Fig. 2 est une vue en coupe par un plan de symétrie analogue à la Fig. 1 dans le cas du procédé de chemisage suivant l'invention;
- La Fig. 3 est une vue en coupe montrant la partie extrême de la chemise en cours de dudgeonnage à l'intérieur du tube;
- La Fig. 4 est un diagramme montrant le profil des températures de soudage en fonction des distances pour un matériau considéré;
- La Fig. 5 est une vue en coupe par un plan de symétrie d'une variante de l'invention.

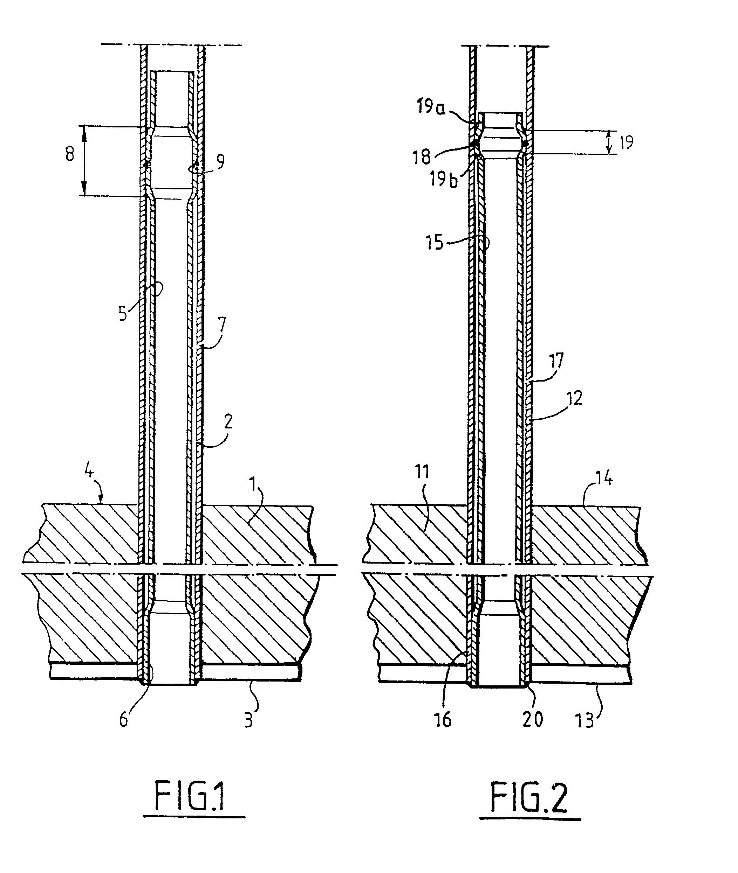

Sur la Fig. 1, on voit une plaque tubulaire 1 de forte épaisseur (de l'ordre de 0,60 m) à l'intérieur de laquelle est dudgeonné un tube 2 sur toute l'épaisseur de la plaque tubulaire entre sa face d'entrée 3 et sa face de sortie 4. Le diamètre extérieur du tube et le diamètre de l'ouverture traversant la plaque tubulaire à l'intérieur de laquelle ce tube est dudgeonné sont de l'ordre de 0,022 m. Le diamètre intérieur du tube est de l'ordre de 0,020 m.

Après un certain temps de fonctionnement du générateur de vapeur, le tube 2 présentait une fissure de petite dimension 7 dans sa partie en dehors de la plaque tubulaire 1. On a donc effectué une réparation grâce à une chemise 5 dont le diamètre extérieur nominal est de 0,019 m et le diamètre intérieur 0,017 m.

La chemise 5 est introduite dans le tube jusqu'au moment où sa partie inférieure affleure la partie inférieure du tube 2, au niveau de la face d'entrée 3 de la plaque tubulaire 1. On effectue alors un dudgeonnage d'une partie 6 de cette extrémité de la chemise dans le tube, à l'intérieur de la plaque tubulaire 1. Cette opération de dudgeonnage a pour effet de réaliser une liaison métallique entre la paroi de la chemise et celle du tube 2 à l'intérieur de la plaque tubulaire 1.

On effectue également une déformation mécanique par dudgeonnage de la chemise 5 dans une seconde zone 8 de cette chemise, à l'intérieur du tube, mais au-dessus de la plaque tubulaire 1.

Jusqu'à présent, pour obtenir une fixation satisfaisante de la chemise 5 dans le tube 2, on réalisait la déformation dans la zone 8 sur une hauteur relativement importante, de l'ordre de 0,05 m, puis on complétait la fixation par une soudure 9 dans la partie médiane de la zone 8, indépendamment des paramètres appliqués au moment de la déformation.

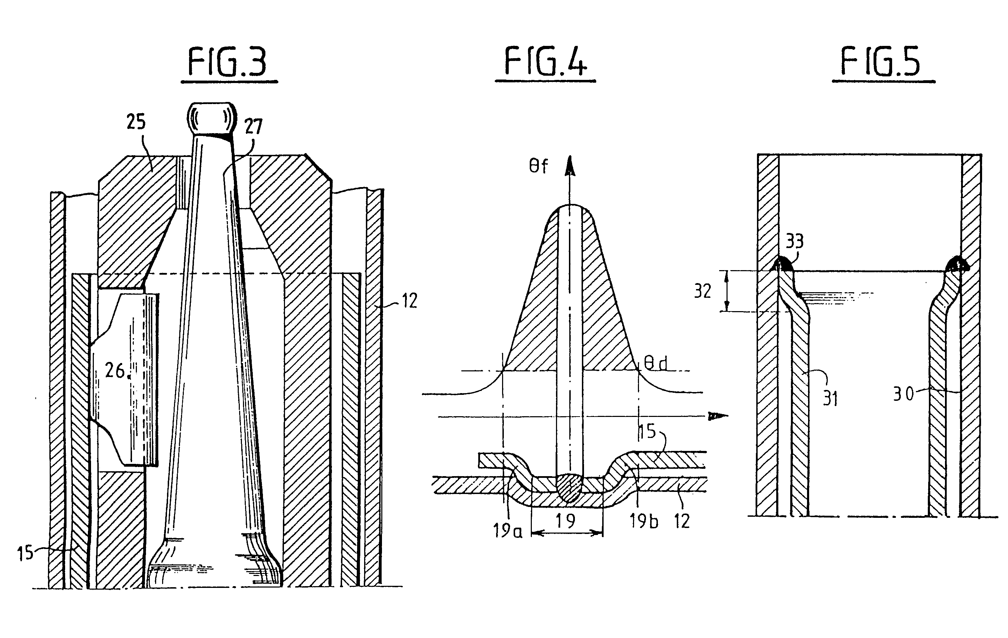

On va maintenant se reporter aux Fig. 2 et 3 pour décrire une opération de chemisage d'un tube suivant le procédé de l'invention.

Un tube 12 d'un diamètre extérieur de 0,0222 m est dudgeonné dans la plaque 11 d'un générateur de vapeur d'un réacteur nucléaire à eau sous pression entre la face d'entrée 13 et la face de sortie 14 de cette plaque tubulaire de grande épaisseur.

Une fissure 17 est apparue dans la paroi du tube 12 en cours de service dans le générateur de vapeur.

On effectue une réparation en introduisant dans le tube 12 depuis la face d'entrée 13 de la plaque tubulaire, une chemise 15, dont le diamètre extérieur est légèrement inférieur au diamètre intérieur du tube 12 pour glisser sans frottement.

La longueur de la chemise 15 a été choisie de façon que lorsque cette chemise est introduite dans le tube, comme représenté sur la Fig. 2, la fissure 17 est recouverte par cette chemise 15. L'extrémité inférieure de la chemise 15 affleure l'extrémité inférieure du tube 12 qui est elle-même pratiquement affleurante sur la face d'entrée 13 de la plaque tubulaire.

On effectue alors une fixation mécanique par dudgeonnage de la partie inférieure 16 de la chemise 15 dans le tube 12. L'étanchéité du tube à son extrémité affleurant la face d'entrée 13 de la plaque tubulaire est assurée par une soudure 20.

Ensuite, on effectue une déformation mécanique dans une zone 19 de la partie extrême de la chemise 15 par une opération de dudgeonnage localisée telle qu'elle est représentée sur la Fig. 3.

Sur la Fig. 3, on voit l'extrémité de la chemise 15 à l'intérieur du tube 12, au niveau de lquelle

est placé, en position de travail, le dudgeon 25 comportant trois galets 26 dont un seul est représenté sur la Fig. 3. Une tige cônique 27 permet de mettre en rotation et de pousser vers l'extérieur les galets 26, de façon parfaitement déterminée. L'avance de la tige 27 permet de contrôler exactement l'expansion diamètrale de l'extrémité de la chemise 15.

Les galets 26 sont placés, comme il est visible sur la Fig. 3, dans une position légèrement en retrait, par rapport à l'extrémité de la chemise 15, et ont une forme extérieure correspondant à la forme de la déformation que l'on désire réaliser sur la chemise 15.

Les paramètres d'expansion de la chemise 15 et du tube 12, pendant l'opération de dudgeonnage, sont réglés de façon qu'après accostage de la chemise 15 par expansion diamètrale dans le domaine plastique, ils provoquent une très légère expansion du tube 12 dans le domaine élastique.

Après retrait du dudgeon 25, le tube 12 se rétracte donc dans la direction diamètrale et assure un serrage de la partie d'extrémité 19 de la chemise 15 déformée dans le domaine plastique.

Ensuite, on complète la fixation de la chemise 15 à l'intérieur du tube 12, et on assure l'étanchéité par une soudure 18 entraînant une fusion de la chemise 15 localisée dans la partie centrale déformée et une fusion partielle du tube 12.

Mais pour obtenir une étanchéité parfaite dans la zone 19, il faut au moment du soudage obtenir la relaxation des contraintes résultant de la déformation mécanique initiale dans les zones singulières 19a et 19b (Fig. 2), c'est-à-dire dans les zones situées de part et d'autre de la déformation.

Pour cela, la déformation dans la zone 19 est localisée sur une hauteur réduite et les paramètres appliqués lors de cette déformation, notamment l'effort de dudgeonnage qui laisse subsister une pression d'interface entre la chemise 15 et le tube 12, sont déterminés en fonction des paramètres de soudage appliqués ultérieurement.

D'autre part, les paramètres de soudage sont déterminés de telle façon que, compte tenu des paramètres associés de la déformation initiale, la température atteinte dans les zones singulières 19a et 19b, soit telle qu'elle dépasse le seuil de la température de détensionnement du matériau considéré dans cesdites zones singulières.

De cette façon, on obtient donc un détensionnement c'est-à-dire une libération des contraintes dans la zone déformée, de manière à ne pas favoriser la corrosion sous contrainte.

En se reportant à la Fig. 4, on va maintenant décrire un exemple de réalisation du procédé.

A la Fig. 4, on a représenté un diagramme montrant le profil des températures de soudage en fonction des distances pour un matériau considéré.

En supposant tout d'abord que le matériau constituant la chemise 15 et le tube 12 est, par exemple, un alliage de nickel-chrome à très fort pouvoir de résistance à la corrosion, on réalise donc dans la zone 19 une déformation mécanique par dudgeonnage sur une hauteur limitée qui est, par exemple, comprise entre 4 et 15 mm. La chemise 15 est déformée plastiquement, tandis que le tube 12 est déformé uniquement dans le domaine élastique. Sur la Fig. 4, on a bien évidemment exagéré les déformations réalisées sur la chemise et le tube.

Dans la partie centrale déformée 19, le cordon de soudure réalisé a une largeur comprise entre 4 et 8 mm.

Les paramètres de soudage sont donc déterminés pour que la température au niveau de la soudure 18 soit sensiblement égale à la température de fusion de l'alliage constituant la chemise et le tube, on a donc

$\theta f \simeq 1\ 400°C$, et également pour que la température atteinte dans les zones singulières 19a et 19b soit supérieure à la température de détensionnement qui est:

$\theta d \simeq 550°C$.

Comme cela est représenté sur la courbe de la Fig. 4, il s'établit un profil de température dans l'ensemble de la zone déformée qui provoque un détensionnement de ladite zone déformée jusqu'au niveau des zones singulières.

On réalise donc consécutivement deux opérations dont les paramètres sont intimement liés les uns par rapport aux autres.

De cette façon, on obtient un assemblage et une étanchéité parfaits en isolant la partie défectueuse du tube.

Sur la Fig. 5, on a représenté une variante de l'invention.

Dans ce cas, on introduit comme précédemment une chemise 31 dans le tube 30 à réparer et on réalise la déformation mécanique par dudgeonnage dans une zone 32 localisée en partie supérieure extrême de la chemise. Une soudure à clin 33 est également réalisée sur l'extrémité de la chemise. Cette disposition permet en outre d'éliminer la zone morte et l'interstice entre l'extrémité de la chemise et le tube, tout en libèrant les contraintes dans la zone singulière unique subsistante.

Le procédé de réparation suivant l'invention peut être appliqué non seulement dans le cas de générateurs de vapeur des réacteurs à eau sous pression, mais également dans le cas de tout générateur de vapeur comportant un faisceau de tubes dont les extrémités sont dudgeonnées dans une plaque tubulaire et sont susceptibles d'être détériorées dans une zone à l'extérieur de cette plaque tubulaire.

Bien entendu, l'invention n'est pas strictement limitée aux différents modes de réalisation décrits à titre d'exemples, mais elle couvre également les réalisations qui n'en différeraient que par des détails, par des simples variantes d'exécution ou par l'utilisation de moyens équivalents.

## Revendications

1. Procédé de réparation par chemisage d'un tube (12, 30) d'un générateur de vapeur comportant un faisceau de tubes et une plaque tubulaire (11) dans laquelle les tubes (12, 30) du faisceau sont dudgeonnés depuis la face d'entrée (13) de la plaque tubulaire (11) sur laquelle affleurent les extrémités du tube (12) jusqu'à la face de sortie (14) par laquelle les tubes pénètrent dans le corps du générateur de vapeur, consistant à introduire dans le tube (12, 30) à réparer depuis la face d'entrée (13) de la plaque tubulaire (11), une chemise tubulaire (15, 31) d'un diamètre extérieur un peu inférieur au diamètre intérieur du tube (12, 30) et d'une longueur adaptée à la réparation à effectuer, à fixer la chemise (15, 31) par dudgeonnage dans le tube (12, 30) dans une première zone proche de son extrémité, au voisinage de la face d'entrée (13) de la plaque tubulaire (11) et à fixer la chemise (15, 31) dans le tube (12, 30) dans une seconde zone en dehors de la plaque tubulaire (11), en réalisant par dudgeonnage une déformation mécanique (19, 32) suivie d'un soudage (18, 33) entre la chemise et le tube, caractérisé par le fait que les paramètres de la déformation mécanique (19, 32) de la chemise (15, 31) réalisée par dudgeonnage dans sa partie extrême opposée à l'extrémité (16) dudgeonnée dans la plaque tubulaire (11), sont calculés en fonction des paramètres de soudage appliqués consécutivement et déterminés de telles façon que la térmpérateur atteinte dans les singulières (19a, 19b) de la zone de fusion, température de détensionnement du matériau considéré dans lesdites zones singulières provoquant ainsi une libération des contraintes dans les zones déformées.

2. Procédé de réparation suivant la revendication 1, caractérise par le fait que la déformation mécanique (32) est localisée en partie supérieure extrême de la chemise (31) de façon à réaliser une soudure à clin (33) tout en libérant les contraintes dans la zone singulière unique subsistante.

3. Procédé de réparation suivant les revendications 1 et 2, caractérisé par le fait que la hauteur de la déformation mécanique est comprise entre 4 et 15 mm et la largeur du cordon de soudure est comprise entre 4 et 8 mm.

## Patentansprüche

1. Wiederherstellungsverfahren durch Verkleidung eines Rohres (12, 30) eines Dampfgenerators der ein Rohrbündel und eine rohrförmige Platte (11) aufweist, in der die Rohre (12, 30) des Bündels von der Eingangsseite (13) der rohrförmigen Platte (11) her eingewalzt sind, auf der die Enden des Rohres (12) bündig eingelassen sind, bis zur Ausgangsseite (14), durch die die Rohre in den Dampfgeneratorkörper vordringen, das besteht aus Einführen in das zu reparierende Rohr (12, 30) von der Eingangsseite (13) der rohrförmigen Platte (11) aus, einer rohrförmigen Verkleidung (15, 31) mit einem Außendurchmesser, der ein wenig geringer ist als der Innendurchmesser des Rohres (12, 30) und einer Länge, die der auszuführenden Reparatur angepaßt ist, aus Befestligen der Verkleidung (15, 31) durch Einwalzen in das Rohr (12, 30) in einer ersten Zone in der Nähe seines Endes, in Nachbarschaft der Eingangsseite (13) der rohrförmigen Platte (11) und aus Fixieren der Verkleidung (15, 31) in dem Rohr (12, 30) in einer zweiten Zone außerhalb der rohrförmigen Platte (11), unter Erzeugung durch Einwalzen einer mechanischen Verformung (19, 32), gefolgt von einer Schweißung (18, 33) zwischen der Verkleidung und dem Rohr, dadurch gekennzeichnet, daß die Parameter der mechanischen Deformation (19, 32) der Verkleidung (15, 31), die durch den Röhreneinwalzvorgang in seinem Endbereich gegenüberliegend dem eingewalzten Ende (16) in die rohrförmige Platte (11), in Abhängigkeit der aufeinanderfolgend angewendeten Schweißparameter berechnet und derart bestimmt sind, daß die in den einzelnen Zonen (19a, 19b) der mechanischen Deformation erreichte Temperatur durch Leitung ausgehend von der Schmelzzone die spannungsfreie Glühtemperatur des in Betracht kommenden Materials in den vereinzelten Zonen übersteigt, wobei sie so eine Befreiung der Spannungen in den verformten Zonen bewirkt.

2. Wiederherstellungverfahren nach Anspruch 1, dadurch gekennzeichnet, daß die mechanische Verformung (32) teilweise weitest oberhalb der Verkleidung (31) derart angeordnet ist, um eine Klemmschweißung (33) zu erzeugen, wobei die Spannungen in der betreffenden einzigen vereinzelten Zone befreit werden.

3. Wiederherstellungsverfahren nach Anspruch 1 oder 2, dadurch gekennzeichnet, daß die Höhe der mechanischen Verformung zwischen 4 und 15 mm beträgt und die Breite der Schweißnaht zwischen 4 und 8 mm liegt.

## Claims

1. Method of repairing, by lining, a tube (12, 30) of a steam generator having a tube bundle and a tube plate (11) inside which the tubes (12, 30) of the bundle are expanded, from the inlet side (13) of the tube plate (11) with which the ends of the tube (12) lie flush as far as the outlet side (14) where the tubes penetrate the housing of the steam generator, consisting in introducing into the tube (12, 30) to be repaired, from the inlet side (13) of the tube plate (11), a tubular liner (15, 31) with an external diameter slightly less than the internal diameter of the tube (12, 30) and of a suitable length to allow the repair to be performed, in fixing the liner (15, 31) inside the tube (12, 30) by expansion, in a first zone close to its end, in the vicinity of the inlet side (13) of the tube plate (11), and in fixing the liner (15, 31) inside the tube (12, 30), in a second zone outside the tube plate (11), by effecting a mechanical deformation (19, 32) by means of expansion, followed by a weld (18, 33) between the liner and the tube, characterised in that the parameters of the mechanical deformation (19, 32) of the liner (15, 31), effected by expansion of its end part opposite the end (16) expanded inside the tube plate (11), are calculated in accordance with the welding parameters subsequently applied and determined so that the temperature reached in the crucial zones (19a, 19b) of the mechanical deformation, by conduction from the fusion zone, exceeds the temperature at which the stresses in the said crucial zones of the material in question are relieved, thereby relieving the stresses in the deformed zone.

2. Repair method according to claim 1, characterised in that the mechanical deformation (32) is located at the end top part of the liner (31) so as to form a fillet weld (33), while relieving the stresses in the single remaining crucial zone.

3. Repair method according to claims 1 and 2, characterised in that the height of the mechanical deformation is between 4 and 15 mm and the width of the weld seam is between 4 and 8 mm.

FIG.1                    FIG.2

# FIG.3

# FIG.4

# FIG.5

EP 0 196 971 B1